# EUROPEAN PATENT SPECIFICATION

(11) **EP 2 250 606 B1**
(45) Date of publication and mention of the grant of the patent: **04.01.2017**
(21) Application number: 09718489.9
(22) Date of filing: 03.03.2009
(51) Int. Cl.: H04N 21/442, H04N 21/4623, H04N 21/4784, G06F 21/31, G06Q 30/02, H04N 21/81

(54) **A METHOD FOR AUTHENTICATING THE PRESENCE OF A VIEWER DURING A PRESENTATION OF VIDEO CONTENT**
VERFAHREN ZUR BELOHNUNG EINES ZUSCHAUERS EINES RUNDFUNKPROGRAMMS FÜR SEINE ANWESENHEIT WÄHREND EINES TEILS DES RUNDFUNKPROGRAMMS
PROCÉDÉ DE COMPENSATION D'AFFICHEUR D'UN PROGRAMME DE DIFFUSION POUR SA PRÉSENCE AU COURS D'UNE PARTIE DE CETTE DIFFUSION

(30) Priority: 04.03.2008 EP 08102262
(43) Date of publication of application: 17.11.2010
(73) Proprietor: Nagravision SA, 1033 Cheseaux-sur-Lausanne (CH)
(72) Inventor: LE PELERIN, Alain, CH-1020 Renens (CH); CHRISTINAT, Stéphane, CH-1063 Boulens (CH)
(74) Representative: Leman Consulting S.A.
(86) International application number: PCT/EP2009/052516
(87) International publication number: WO 2009/109583

(56) References cited:
- EP-A- 1 111 924
- EP-A- 1 607 826
- WO-A-00/10327
- WO-A-2005/098764
- US-A1- 2004 030 599
- US-A1- 2004 073 813
- US-A1- 2006 294 547
- CHRIS J. MITCHELL: "Using Human Interactive Proofs to Secure Human-Machine Interactions Via Untrusted Intermediaries"[Online] 2006, XP002522627 Retrieved from the Internet: URL:http://www.isg.rhul.ac.uk/~cjm/uhipts. pdf> [retrieved on 2009-04-03]
- PRASERTSATID, NOPPHARAT: "Implementation conditional access system for pay TV based on Java card" COMPUTATIONAL ELECTROMAGNETICS AND ITS APPLICATIONS, 2004. PROCEEDINGS. ICCEA 2004. 2004 3RD INTERNATIONAL CONFERENCE ON, [Online] 1 November 2004 (2004-11-01), - 4 November 2004 (2004-11-04) pages 533-536, XP002522680 Retrieved from the Internet: URL:http://ieeexplore.ieee.org/stamp/stamp .jsp?tp=&arnumber=1459410&isnumber=31389> [retrieved on 2009-04-03]
- BUFORD J ET AL: "Analysis of using java card for DRM master key security" CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA,IEEE, vol. 2, 8 January 2006 (2006-01-08), pages 1129-1133, XP010893351 ISBN: 978-1-4244-0085-0

## Description

### INTRODUCTION

The present invention relates to the domain of TV broadcasting or more generally to digital audio/video broadcasting, particularly to the aspect of advertising, where an advertiser employs techniques to persuade a viewer to continue to view parts of a broadcast which he had not previously intended to view and/or, had the advertiser not employed the techniques in question, the viewer would normally have a tendency to ignore.

### BACKGROUND OF THE INVENTION

A significant part of the financing of TV programme distribution is covered by advertising revenue. The distribution of TV programmes nowadays is achieved through many different channels, for example by broadcasting via satellite, radio, cable or by internet. TV programmes may also be stored on various storage mediums such as hard disk, DVD or memory unit for subsequent viewing. Apparatus for viewing of TV programmes is also varied and can be a TV set, a personal computer (PC) or a mobile device such as a phone, a personal digital assistant (PDA) or a portable TV. Each of these mediums also gives the possibility for an advertiser to reach an audience.

Advertisers are willing to pay sizable amounts of money in buying the rights to include commercial content in a broadcast or stored programme in order to influence viewers of said broadcast program to take some action as a result of having seen their message. However, viewers have a tendency to either skip the commercial content in the case where the programme is being viewed from a recording of a previous broadcast, or to change channel in order to avoid the commercial content or to simply stop viewing the broadcast by leaving the vicinity of the viewing apparatus during the airing of the commercial content. In order to circumvent this perceived problem and for advertisers to maximize payback on the costly process of producing and airing commercial messages, advertisers have looked for ways to hold the viewers' attention during the time that their messages are being played. This has been achieved by, for example carefully authoring the first or last number of seconds of a commercial break to provide a "teaser" to entice the viewer to watch multiple commercials during the commercial break. Other techniques, particularly in the case where a TV programme is being viewed from a medium on which it had previously been stored, involve ensuring the order of reproduction of the programme data with respect to the commercial material. For example, a part of a film will not be readable until a certain amount of commercial material has been played.

Another technique employed by advertisers to encourage consumers to read, watch or listen to their commercial messages is to offer a reward or some kind of compensation to a consumer in exchange for his having consumed the commercial content. Systems in common use today include the internet-based varieties, which are well documented in existing literature and by nature of the interactivity of the internet, are readily adapted to encouraging the consumer's active participation by soliciting some kind of reaction from the consumer. The reaction can be easily verified and compensation allotted accordingly. Similarly systems for rewarding consumers for their reaction during the time that a commercial message is being viewed are easily adapted for use during the playback of a recorded programme and are equally well documented in the literature. The present invention however focuses on the less well-known problems associated with the application of the reward system to the broadcast field.

Some of the techniques used by advertisers to ensure that the order of reproduction of programme data and commercial material is respected, or to monitor the viewer's reactions, have been borrowed from the Pay-TV industry. It is common practice in the industry for video content to be subject to conditional access enforcement by a security module. A stream of data is transmitted in an encrypted manner to a user terminal, which can be a TV or a receiver or any apparatus capable of receiving video data. By encrypting the data, the owner of said data can impose certain conditions regarding access to the data, the conditions usually dependant upon the payment of a fee. The encryption is done under control words or traffic encryption keys, which are changed at regular intervals (typically between two and thirty seconds, but may be much longer) in order to circumvent possible misuse by a third party who discovers the control word or encryption key.

In order for the receiver to be able to decrypt the data stream, encrypted under the control words, the latter are sent independently of the data stream within special control messages known as an ECM (entitlement control messages), which are themselves encrypted under a key known as a transmission key, which is unique to the transmission system between a control centre and a security module associated with the user terminal. The control word may be obtained by decrypting the entitlement control messages by means of the transmission key. Alternatively, the decryption of the ECM by the transmission key leads to an intermediate value which allows the determination of the control words, usually through a one-way function applied to the intermediate value.

The security operations are generally carried out in a security module associated with the user terminal. The security module can be represented in one of four different forms. The first of these consists in a microprocessor card, a smart card, or more generally an electronic module usually in the form of a key or a badge. This type of module is generally removable and connectable to the user terminal. The most common form comprises a set of electric contacts, but may also exist in contactless form, for example of type ISO 14443.

A second known form consists in an integrated circuit chip, generally placed in the user terminal in a permanent and non-removable manner. One such example is a circuit wired on a base or connector such as a SIM module connector.

In a third form, the security module is embedded within an integrated circuit chip that also has another function, for example in a descrambling module or in the microprocessor of the user terminal.

In a fourth embodiment, the security module is not realised through hardware, but rather its function is implemented through software. Given that in the four cases the function is identical although the security level differs, the term security module will be used regardless of the way in which its function is realized.

A part of the procedure during the decryption of an ECM is the verification for the presence in the security module of the access rights to the content in question. These rights can be managed by special authorization messages known as EMM

(Entitlement Management Messages), which are capable of loading the rights directly into the security module.

To those acquainted with the field of advertising, there is a general awareness of techniques in use on the internet to reward users for their active attention to advertisements. The level of attention afforded to such advertisements can be tested by having the user interact in some way during the time that the advertising content is playing and subsequently checking his response. However, the same technique applied to the medium of TV broadcasting is less common. A solution to this problem is described in United States Patent Application US2006/0294547A1. This document describes a system and a method for rewarding a viewer of a televised advertisement with the opportunity to watch an otherwise scrambled future broadcast at no charge. This is achieved by transmitting an entitlement management message (EMM) only during the commercial segments so that a viewer whose receiving device is tuned to the station broadcasting the commercial content will receive the EMM thus modifying his rights in order to be able to descramble the future broadcast. Furthermore, the system may require the user to participate or interact in some manner during the airing of the commercial segment e.g. clicking on a remote control in order to receive the EMM, thus ensuring the viewer's presence.

The above solution however does not necessarily prevent someone from employing a means to remotely activate the required controls to simulate the presence of a viewer. Since the commercial is aired at the same time to a plurality of receivers, it would suffice for a hacker to perform the required interaction once while simultaneously triggering one or several remote devices at one or several other remote locations to perform the same manoeuvre at those remote locations thus cheating the system.

The paper "Using Human Interactive Proofs to Secure Human-Machine Interactions Via Untrusted Intermediaries", Chris J. Mitchell, XP002522627 discloses methods for Human Interactive Proofs (HIPs) in untrusted computing environments.

J The object of the present invention is to address this problem by ensuring that each viewer, using a receiver/decoder with a security module, is required to interact in a way which is unpredictable and which is unique to that particular security module. In this way each correctly verified interaction from a viewer guarantees that said viewer was in the vicinity of his receiver/decoder when the interaction was performed. The present invention uses some of the techniques associated with conditional access systems described above in order to achieve the anticipated goals.

### SUMMARY OF THE INVENTION

The present invention relates to a method for authenticating the presence of a viewer as defined in claim 1.

### BRIEF DESCRIPTION OF THE DRAWINGS

The invention will best be understood by reference to the following detailed description of the preferred embodiment when read in conjunction with the accompanying drawings, wherein:
- Figs. 1a, 1b, 1c and 1d show different means for soliciting a viewer's interaction.
- Fig. 2 shows a schematic representation of one embodiment of the current invention.

### DETAILED DESCRIPTION

When a programme is broadcast to a plurality of viewers the programme often includes portions containing commercial content. These portions are usually inserted at regular intervals during the programme. To dissuade the viewer from leaving the vicinity of the display unit or changing channel during the time that the commercial content is being broadcast, the display of the commercial content is augmented by a message or some other visual stimulus which is designed to be of interest to the viewer. The message is displayed at the same time as the commercial content, and is graphically embedded in the display of the commercial content. The message is intended to test the viewer's level of attention during the airing of the commercial content.

The present invention can be used by a viewer having a system comprising a receiver/decoder, a display unit and a viewer input means such as a remote control. A first signal, comprising the video content, or more specifically the commercial content, is received by the receiver/decoder thus allowing for the video content to be displayed on the display unit.

The receiver/decoder further comprises a security module. At least a part of the displayed message is generated by the security module thus guaranteeing that the displayed message is personalised with respect to the particular viewer's security module, each viewer therefore seeing a different message. The viewer is required to respond to the display of the message via his viewer input means, usually an alphanumeric keyboard, remote control device, joystick or some other such input means.

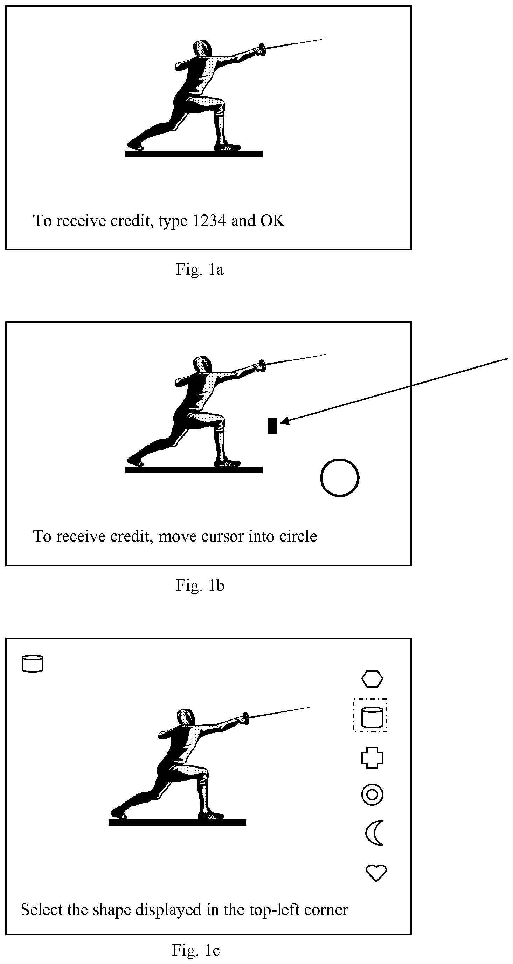

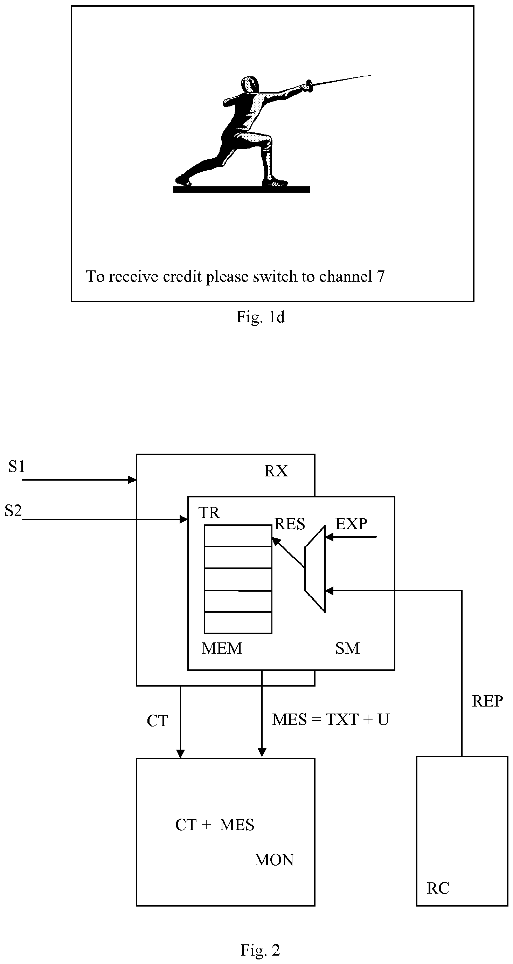

The message may take one of several forms. For example, it could be a graphical representation of some instructions and an alphanumeric string. The instructions could prompt the viewer to enter the alphanumeric string that he sees on the screen as shown in Fig. 1 a.

By way of a second example, instead of an alphanumeric string, the message could include a geometric form, where the position in which the geometric form appears on the screen could be a significant parameter. This parameter would be required to be given by the viewer as part of his response following the display of the message. For example, the display of the message could require the viewer to move a cursor into the geometric form as shown in Fig. 1 b.

We can imagine many different ways to prompt the viewer to a specific interaction such as displaying a symbol in a first area of the display unit and displaying in a second area a list of symbols, including a copy of the symbol in the first area, and prompting the viewer to move the cursor to the same symbol in the list which matches the symbol in the first area as shown in Fig. 1 c.

By way of a further example, the message could lead to the display of an object which describes a particular on-screen trajectory over time, requiring the viewer to reproduce the observed trajectory by way of an appropriate viewer input means such as a keyboard or a joystick.

In order to trigger the security module to generate the message to be displayed, the receiver/decoder receives a second signal comprising a trigger. This second signal could be in the form of an entitlement control message (ECM), commonly used in the Pay-TV industry, for example. The second signal is sent to the security module. Upon reception of the second signal the security module generates a value. The value is thus personalised and can be unique for each time a second signal is received. The value can be for example a random number, a random alphanumeric string, a set of numbers to be used as arguments of a predetermined function, a set of coordinates corresponding to a position or an area on the display unit or the value could be a vector quantity or set of vector quantities describing a trajectory to be followed on the display unit. Other examples for the value could be a code corresponding to a symbol or a geometric shape to be displayed or the value could be a number corresponding to a channel to which the viewer would be prompted to switch to receive further instructions. The value could even be a combination of any of the above.

The value generated in the security module is used to form the message to be displayed on the display unit thereby prompting the viewer's interaction. The message is embedded into the display of the video content. According to an embodiment of the present invention at least part of the message is in graphic format and easily readable by the viewer but is not machine-readable, thus avoiding the problem of someone being able to remotely interpret the message. The message could be for example "Please enter the sum of 4 and 5".

As well as generating the value to be used in the display of the message, the security module also calculates an expected response. For example in the above case the expected response would be "9". By way of further example, if the value were a set of coordinates and the message prompted the viewer to click on a circle which appeared at a position given by the set of coordinates, then the expected result would be the set of coordinates. In this case the viewer input means could be a joystick capable of returning a set of coordinates corresponding to a point or an area indicated on the display by the viewer.

The viewer responds to the message displayed by entering a value on a keyboard or by selecting a value on a remote control or by indicating a position or set of positions on the display unit. The security module verifies the viewer's response with respect to the expected response in order to authenticate the presence of the viewer during the presentation of the video content.

In another embodiment of the present invention the message is displayed while the user is tuned to a first channel and prompts the viewer to switch to a second channel as shown in Fig. 1d. The second channel could for example be dedicated to commercial content. Once the viewer has switched to the second channel, a third signal is received and sent to the security module where it is treated in the same way as the second signal described above. The trigger which causes the display of the message requesting the viewer to tune to the second channel could in fact be present on a plurality of non-commercial channels, thus augmenting the chances of encouraging many viewers to switch from a non-commercial channel to a commercial channel.

Instead of having an ECM to convey the trigger, it would also be possible to use any other form of encrypted data generally used in the Pay-TV industry, such as certain data within the service information tables (SI tables), for example the Event Information Tables (EIT) or Signal Description Data (SDT).

The authentication procedure according to an embodiment of the present invention is illustrated In Fig. 2. A first signal (S1) is received by a receiver/decoder (RX). This first signal comprises video content (CT). The video content is displayed on a display unit (MON). During the time that the video content (CT) is being displayed, a second signal (S2) is received by the receiver/decoder (RX) and passed to the security module (SM). The second signal (S2) comprises a trigger (TR), which causes the security module to generate a personalised value (U). The personalised value (U) is used to form a message (MES) which is then displayed on the display unit (MON). The message (MES) is embedded into the display of the video content (CT+MES) in such a way that it is recognizable by a viewer i.e. a human and preferably not readable by a computer or other type of machine and therefore not readable remotely. The message (TXT+U) conveys instructions designed to prompt the viewer to make a specific action. The specific action is unique to the security module which generated the personalised value for the particular trigger (TR) received. The security module (SM) also calculates an expected response (EXP) to the message (MES). The viewer responds using his viewer input means (MON) and his response (REP) is sent to the security module (SM), which compares the expected response (EXP) with the viewer's response (REP). A correct match of expected response (EXP) to viewer's response (REP) thus authenticates the viewer's presence during the display of the video content (CT). The result of the authentication (RES) is accumulated in a memory (MEM) within the security module (SM) in order that it may be used in a possible reward strategy in compensating the viewer for having watched a certain amount of video content (CT).

It is worth noting that the second signal comprises identification data (time stamp or incremental value) aiming at avoiding replaying such second signals more that once. It is the case when a video content is stored in an hard disk and replayed at a later time. The security module keeps track of the second signals already processed and rejects those presented twice.

This can be achieved by storing the latest date included in a second signal and rejecting second signal having a date anterior to the last stored date. Another method is to store the identifier of such second signals (which are usually incremented linearly) and rejecting second signals having an identifier lower than the last stored identifier.

In another embodiment of the present invention, the second signal (S2) could comprise further information to be used in the management of the rewards allotted following a positive authentication. For example, the second signal could contain information defining how much credit the viewer will be allocated for a correct response. Another possibility is for a credit limit to be included, whereby the security module will credit the viewer only if the viewer has not exceeded the specified credit limit. Such a credit limit may also be time-bound in that it would apply to a certain period of time. For example a viewer could be restricted to accruing a maximum of x units of credit in one viewing session of y minutes. Alternatively, the ECM could contain a time window within which the viewer is allowed to submit his response. For example, a second signal received at time t could contain either a time t+delay to be used to compare against the time the viewer's response is given, thus qualifying or disqualifying its validity with respect to the time the viewer replies. Instead of an absolute time, the ECM could contain a value for "delay" which could be loaded into a timer. In this case the viewer's response would be accepted as long as the timer has not counted down to zero.

According to another embodiment of the present invention and in the case that the receiver/decoder is permanently connected with an authorization center, the response given by the viewer is transmitted to the authorization center with the identification of the security module. The authorization center can verify the conformity of this response and send a message to the security module to update the credit according to a reward policy.

According to another embodiment, the expected response is constituted in two parts, one being included graphically in the first signal (in the video content) and the second part being generated by the security module. The software application running on the receiver/decoder will receive only the second part from the security module and is then not able alone (with a modified program) to determine the complete expected response. It should be noted that the generated expected response (first expected response) is transferred in logical form to the software application running on the receiver/decoder, said software converting these logical values into graphical elements. It would be then be easy for the software to simply echo the received logical value to pass the authentication step.

The viewer sees on the display the first part of the expected response is included in the frame of the displayed content and as well as the second part which is processed by the application and embedded on the displayed content. In order to verify that the complete expected response is inputted by the viewer, the security module should also know the first part and said part (the logical value of the graphical representation) is included into the second signal.

Aspects of the invention are set out in the appended claims.

## Claims

1. A method for authenticating the presence of a viewer during a presentation of video content (CT), said method using a system comprising at least a receiver/decoder (RX), a display unit (MON) and a viewer input means (RC), said receiver/decoder (RX) comprising a security module (SM), said method comprising the following steps:
- receiving a broadcast programme comprising the video content (CT) and at least one encrypted data item;
- displaying the video content (CT) on the display unit (MON);
- transferring the encrypted data item to the security module (SM), thus causing said security module (SM) to generate a value (U) unique for each time an encrypted data item is received;
- displaying a message (MES) on the display unit (MON), said message (MES) being personalised with respect to the security module (SM), the message (MES) comprising at least part of said value (U) and being designed to provoke the viewer to respond;
- generating, by the security module (SM), an expected response (EXP) based on at least part of said value (U);
- receiving the viewer's response (REP) via the viewer input means (RC);
- transferring the viewer's response (REP) to the security module (SM);
- comparing the viewer's (REP) response with the expected response (EXP) thus producing a result (RES) for said authentication, said comparison being made using the security module (SM); and
- storing the result (RES) for said authentication in a memory (MEM) in said security module.

2. The method according to claim 1, wherein the encrypted data item is an ECM or any other form of encrypted data used in service information tables (SI tables) in the Pay-TV industry.

3. The method of either of claims 1 or 2, wherein said generated expected response constituting a first expected response, said broadcast programme further comprises a graphical representation of a second expected response, said second expected response being included in the encrypted data item, the security module comparing the response received by the viewer with the first expected response and the second expected response.

4. The method of any of the preceding claims, wherein said value (U) is a random alphanumeric string.

5. The method of any of claims 1 to 3, wherein at least part of said message (MES) comprises at least one non-machine-readable element, said message (MES) being readable by said viewer.

6. The method of claim 5 wherein said non-machine-readable element comprises a graphical representation of an alphanumeric string.

7. The method of claim 5 wherein said non-machine-readable element comprises a graphical representation of a geometric shape.

8. The method of any of claims 1 to 3, wherein said expected response (EXP) comprises positional information.

9. The method of any of claims 1 to 4, wherein said message (MES) comprises a plurality of values, said values being used as arguments of a predetermined function, said expected response (EXP) being the solution to said predetermined function.

10. The method of claim 1 wherein a plurality of authentications is made, the results (RES) of the authentications being accumulated in the memory (MEM) in said security module.

11. The method according to claim 1, wherein the encrypted datum comprises identification data in the form of a time stamp, the method further comprising:
storing the latest date included in an encrypted data item; and
rejecting a further encrypted data item having a date anterior to the stored date.

12. The method according to claim 1, wherein the encrypted data item comprises identification data in the form of an incremental value, the method further comprising: ing:
storing the incremental value included in an encrypted data item; and
rejecting a further encrypted data item having an incremental value lower than the stored incremental value.

13. The method according to claim 1, wherein the encrypted data item comprises further information to be used in the management of an award allotted following a positive authentication, the information defining how much credit the viewer will be allocated for a correct response.

14. The method according to claim 1, further comprising:
transmitting the viewer's response and an identifier of the security module to an authorisation centre;
verifying, by the authorisation centre, the conformity of the response; and
sending a message to the security module to update the credit according to a reward policy.

## Patentansprüche

1. Verfahren zur Authentifizierung der Anwesenheit eines Zuschauers während der Präsentation eines Videoinhalts (CT), unter Verwendung eines Systems mit mindestens einem Empfänger/Decoder (RX), einem Bildschirm (MON) und einer Zuschauer-Eingabeeinrichtung (RC), wobei der Empfänger/Decoder (RX) ein Sicherheitsmodul (SM) umfasst, wobei das Verfahren die folgenden Phasen umfasst:
- Empfang einer Sendung mit dem Videoinhalt (CT) und mindestens einer verschlüsselten Dateneinheit;
- Anzeige des Videoinhalts (CT) auf dem Bildschirm (MON);
- Übertragung der verschlüsselten Dateneinheit an das Sicherheitsmodul (SM), was dazu führt, dass das Sicherheitsmodul (SM) einen Wert (U) erzeugt, der für jede empfangene verschlüsselte Dateneinheit eindeutig ist;
- Anzeige einer Meldung (MES) auf dem Bildschirm (MON), die in Bezug auf das Sicherheitsmodul (SM) personalisiert ist und mindestens einen Teil des Wertes (U) enthält und den Zuschauer zum Mitmachen auffordern soll;
- Erzeugung, durch das Sicherheitsmodul (SM), einer erwarteten Antwort (EXP) auf der Grundlage von mindestens einem Teil des besagten Wertes (U);
Empfang der Antwort des Zuschauers (REP) über die Zuschauer-Eingabeeinrichtung (RC);
- Übertragung der Antwort des Zuschauers (REP) an das Sicherheitsmodul (SM);
- Vergleich der Antwort des Zuschauers (REP) mit der erwarteten Antwort (EXP) und somit Erzeugung eines Ergebnisses (RES) für die Authentifizierung, wobei der Vergleich unter Verwendung der Sicherheitsmoduls (SM) erfolgt; und
- Speichern des Ergebnis (RES) für besagte Authentifizierung in einem Speicher (MEM) in dem Sicherheitsmodul.

2. Verfahren nach Anspruch 1, wobei die verschlüsselte Dateneinheit eine ECM ist oder jegliche andere Form von verschlüsselten Daten, die in Informations-Servicetafeln (SI-Tabellen) in der Pay-TV-Industrie verwendet werden.

3. Verfahren nach einem beliebigen der Ansprüche 1 oder 2, wobei die erzeugte erwartete Antwort eine erste erwartete Antwort bildet und die Sendung des Weiteren eine grafische Darstellung einer zweiten erwarteten Antwort umfasst, wobei die zweite erwartete Antwort in der verschlüsselten Dateneinheit enthalten ist, wobei das Sicherheitsmodul die vom Zuschauer empfangene Antwort mit der ersten erwarteten Antwort und der zweiten erwarteten Antwort vergleicht.

4. Verfahren nach einem der vorigen Patentansprüche, wobei besagter Wert (U) eine zufällige alphanumerische Zeichenfolge ist.

5. Verfahren nach einem beliebigen der Ansprüche 1 bis 3, wobei mindestens ein Teil der Meldung (MES) mindestens ein nicht maschinenlesbares Element umfasst, wobei die Meldung (MES) vom Zuschauer lesbar ist.

6. Verfahren nach Anspruch 5, wobei besagtes nicht maschinenlesbares Element eine grafische Darstellung einer alphanumerischen Zeichenfolge umfasst.

7. Verfahren nach Anspruch 5, wobei besagtes nicht maschinenlesbares Element eine grafische Darstellung einer geometrischen Form umfasst.

8. Verfahren nach einem beliebigen der Ansprüche 1 bis 3, wobei die erwartete Antwort (EXP) Positionsangaben umfasst.

9. Verfahren nach einem beliebigen der Ansprüche 1 bis 4, wobei die Meldung (MES) eine Vielzahl von Werten umfasst, wobei die Werte als Argumente einer vorherbestimmten Funktion verwendet werden, wobei die erwartete Antwort (EXP) die Lösung der vorherbestimmten Funktion ist.

10. Verfahren nach Anspruch 1, wobei eine Vielzahl von Authentifizierungen erfolgt und die Ergebnisse (RES) der Authentifizierungen in dem Speicher (MEM) in besagtem Sicherheitsmodul gesammelt werden.

11. Verfahren nach Anspruch 1, wobei das verschlüsselte Datum Identifizierungsdaten in Form eines Zeitstempels umfasst, wobei das Verfahren des Weiteren folgendes umfasst:
Speichern des letzten Datums, das in einer verschlüsselten Dateneinheit enthalten ist; und
Zurückweisung einer weiteren verschlüsselten Dateneinheit, die ein Datum hat, das vor dem gespeicherten Datum liegt.

12. Verfahren nach Anspruch 1, wobei die verschlüsselte Dateneinheit Identifizierungsdaten in Form eines inkrementalen Wertes umfasst, wobei das Verfahren des Weiteren folgendes umfasst:
Speichern des inkrementalen Wertes, der in einem verschlüsselten Datenartikel enthalten ist; und
Zurückweisung einer weiteren verschlüsselten Dateneinheit, deren inkrementaler Wert niedriger als der gespeicherte inkrementale Wert ist.

13. Verfahren nach Anspruch 1, wobei die verschlüsselte Dateneinheit weitere Informationen umfasst, die in der Verwaltung einer Belohnung verwendet werden, die nach einer positiven Authentifizierung vergeben wird, wobei die Informationen angeben, wieviel Kredit dem Zuschauer für eine richtige Antwort zugeteilt wird.

14. Verfahren nach Anspruch 1, das des weiteren folgendes umfasst:
Übertragung der Antwort des Zuschauers und einer Kennung des Sicherheitsmoduls an eine Autorisierungszentrale;
Überprüfung, durch die Autorisierungszentrale, der Konformität der Antwort;
und
Senden einer Meldung an das Sicherheitsmodul, um den Kredit gemäß einer Belohnungsstrategie zu aktualisieren.

## Revendications

1. Méthode pour authentifier la présence d'un spectateur pendant une présentation de contenu vidéo (CT), ladite méthode utilisant un système comprenant au moins un récepteur/décodeur (RX), une unité d'affichage (MON) et un moyen d'entrée du spectateur (RC), ledit récepteur/décodeur (RX) comprenant un module de sécurité (SM), ladite méthode comprenant les étapes suivantes:
- recevoir un programme de diffusion comprenant le contenu vidéo (CT) et au moins un élément de données chiffrées;
- afficher le contenu vidéo (CT) sur l'unité d'affichage (MON);
- transférer l'élément de données chiffrées au module de sécurité (SM), amenant ainsi ledit module de sécurité (SM) à générer une valeur (U) unique pour chaque fois qu'un élément de données chiffrées est reçu;
- afficher un message (MES) sur l'unité d'affichage (MON), ledit message (MES) étant personnalisé par rapport au module de sécurité (SM), le message (MES) comprenant au moins une partie de ladite valeur (U) et étant conçu pour pousser le spectateur à répondre;
- générer, par le module de sécurité (SM), une réponse attendue (EXP) en fonction d'au moins une partie de ladite valeur (U);
- recevoir la réponse du spectateur (REP) par le moyen d'entrée du spectateur (RC);
- transférer la réponse du spectateur (REP) au module de sécurité (SM);
- comparer la réponse du spectateur (REP) avec la réponse attendue (EXP) produisant ainsi un résultat (RES) pour ladite authentification, ladite comparaison étant faite utilisant le module de sécurité (SM); et
- mémoriser le résultat (RES) pour ladite authentification dans une mémoire (MEM) dans ledit module de sécurité.

2. Méthode selon la revendication 1, où l'élément de données chiffrées est un ECM ou n'importe quelle autre forme de données chiffrées utilisées dans des tables d'information de service (tables SI) dans le secteur de la télévision à péage.

3. Méthode selon l'une quelconque des revendications 1 ou 2, où ladite réponse attendue générée constitue une première réponse attendue, ledit programme de diffusion comprend en outre une représentation graphique d'une deuxième réponse attendue, ladite deuxième réponse attendue étant incluse dans l'élément de données chiffrées, le module de sécurité comparant la réponse reçue par le spectateur avec la première réponse attendue et la deuxième réponse attendue.

4. Méthode selon l'une quelconque des revendications précédentes, où ladite valeur (U) est une chaîne alphanumérique aléatoire.

5. Méthode selon l'une quelconque des revendications 1 à 3, où au moins une partie dudit message (MES) comprend au moins un élément non lisible par machine, ledit message (MES) étant lisible par ledit spectateur.

6. Méthode selon la revendication 5 où ledit élément non lisible par machine comprend une représentation graphique d'une chaîne alphanumérique.

7. Méthode selon la revendication 5 où ledit élément non lisible par machine comprend une représentation graphique d'une forme géométrique.

8. Méthode selon l'une quelconque des revendications 1 à 3, où ladite réponse attendue (EXP) comprend des informations de position.

9. Méthode selon l'une quelconque des revendications 1 à 4, où ledit message (MES) comprend une pluralité de valeurs, lesdites valeurs étant utilisées comme arguments d'une fonction prédéterminée, ladite réponse attendue (EXP) étant la solution à ladite fonction prédéterminée.

10. Méthode selon la revendication 1 où une pluralité d'authentifications est faite, le résultat (RES) des authentifications étant accumulé dans la mémoire (MEM) dans ledit module de sécurité.

11. Méthode selon la revendication 1, où la donnée chiffrée comprend des données d'identification sous la forme d'un horodatage, la méthode comprenant en outre:
- mémoriser la dernière date incluse dans un élément de données chiffrées; et
- rejeter un autre élément de données chiffrées ayant une date antérieure à la date mémorisée.

12. Méthode selon la revendication 1, où l'élément de données chiffrées comprend des données d'identification sous la forme d'une valeur incrémentale, la méthode comprenant en outre:
- mémoriser la valeur incrémentale incluse dans un élément de données chiffrées; et
- rejeter un autre élément de données chiffrées ayant une valeur incrémentale inférieure à la valeur incrémentale mémorisée.

13. Méthode selon la revendication 1, où l'élément de données chiffrées comprend des informations complémentaires à utiliser dans la gestion d'un prix attribué suite à une authentification positive, les informations définissant le montant de crédit qui sera assigné au spectateur pour une réponse correcte.

14. Méthode selon la revendication 1, comprenant en outre:
- transmettre la réponse du spectateur et un identificateur du module de sécurité à un centre d'autorisation;
- vérifier, par le centre d'autorisation, la conformité de la réponse; et
- envoyer un message au module de sécurité pour mettre à jour le crédit conformément à une politique de récompense.
